# EUROPÄISCHE PATENTANMELDUNG

(11) **EP 3 785 863 A1**
(43) Veröffentlichungstag der Anmeldung: **03.03.2021**
(21) Anmeldenummer: 19000388.9
(22) Anmeldetag: 28.08.2019
(51) Int. Cl.: B25J 9/04, B25J 9/10, B21D 43/10

(54) **HANDHABUNGSGERÄT MIT ZWEI GELENKARMTEILEN**

(71) Anmelder: Horstkemper Maschinenbau GmbH, 33397 Rietberg-Mastholte (DE)
(72) Erfinder: Wiesing, Helmut, 33129 Delbrück (DE); Rosenhäger, Jörg, 33793 Bielefeld (DE)
(74) Vertreter: Kayser, Christoph

(57) **Zusammenfassung**

Ein Handhabungsgerät mit einer Befestigungskonsole (500), der über eine erste Gelenkachse (G1) mit einem ersten Gelenkarmteil (505) verbunden ist, einem zweiten Gelenkarmteil (527), das über eine zweite Gelenkachse (G2) mit dem ersten Gelenkarmteil (505) verbunden ist und mit einem Arbeitsgerät (535), das über eine dritte Gelenkachse (G3) mit dem zweiten Gelenkarmteil (527) verbunden ist, und mit einer Steuereinrichtung zum Steuern eines X-Antriebs (501), derart, dass das Arbeitsgerät (535) eine Bewegung in wenigstens einer X-Richtung durchführen kann, ist dadurch gekennzeichnet, dass ein C-Antrieb (515) in dem ersten Gelenkarmteil (505) angeordnet ist und über einen C1 -Riemen (521) mit der zweiten Gelenkachse (G2) verbunden ist.

## Beschreibung

Die vorliegende Erfindung betrifft ein Handhabungsgerät mit einer Befestigungskonsole, die über eine erste Gelenkachse mit einem ersten Gelenkarmteil verbunden ist, mit einem zweiten Gelenkarmteil, das über eine zweite Gelenkachse mit dem ersten Gelenkarmteil verbunden ist und mit einem Arbeitsgerät, das mit dem zweiten Gelenkarmteil verbunden ist, und mit einer Steuereinrichtung zum Steuern eines X-Antriebs, derart, dass das Arbeitsgerät eine Bewegung in wenigstens einer X-Richtung durchführen kann.

Ein solches Handhabungsgerät ist aus dem Stand der Technik zum Beispiel als Schwenkarm-Roboter aus DE 102 46 499 A1 bekannt. Bei diesem ist der Schwenkarm zwischen einem Arbeitsgerät und einer Befestigungskonsole zweiteilig ausgebildet. Ein X-Antrieb im Bereich der Befestigungskonsole überträgt eine Bewegung des Arbeitsgerätes in X-Richtung mittels Riemen und Riemenscheiben über zwei Schwenkachsen. Beim Ausschwenken des ersten Gelenkarmteils verkürzt sich die Gesamtlänge des beider Gelenkarmteile und bewegt sich das Arbeitsgerät linear zurück. Aufgrund fester Übersetzungsverhältnisse ist eine Bewegung in C-richtung direkt von der X-Bewegung abhängig und in den meisten Fällen auf die Beibehaltung der Orientierung, also auf einen Nullwert, eingestellt.

Mit der vorliegenden Erfindung ist es möglich, einen separaten Antrieb für eine C-Ausrichtung auf die zweite Gelenkachse wirken zu lassen, die wiederum über das zweite Gelenkarmteil und eine dritte Gelenkachse mit dem Arbeitsgerät verbunden ist. Die Anordnung des C-Antriebs in dem ersten Gelenkarmteil ist platzsparend und führt zu einer kompakten Bauweise des mehrachsig angetriebenen Gelenkarms.

Ein weiterer Vorteil der vorliegenden Erfindung ist, dass am C1-Antrieb ein erstes C 1-Riemenrad und auf der zweiten Gelenkachse ein zweites C 1-Riemenrad drehbar gelagert sind, die über den C 1-Riemen miteinander gekoppelt sind. Dadurch ist es möglich, die Bewegung des vom C1-Antrieb angetriebenen ersten C1-Riemenrads auf das zweite C1-Riemenrad und somit die zweite Gelenkachse zu übertragen. Durch die Übertragung ist es möglich, die Bewegung über das zweite Gelenkarmteil auf das Arbeitsgerät zu übertragen.

Zu diesem Zweck ist es von Vorteil, dass auf der zweiten Gelenkachse ein C2-Riemenrad fest mit dem C1-Riemenrad verbunden ist. Die feste Verbindung zwischen dem C1-Riemenrad und dem C2-Riemenrad führt zu einer Übertragung einer Bewegung des C 1-Riemenrades über den C 1-Riemen sowohl auf das C1-Riemenrad als auch auf das C2-Riemenrad, so dass die Möglichkeit besteht, diese Bewegung über das zweite Gelenkarmteil auf das Arbeitsgerät zu übertragen.

Zu diesem Zweck ist es ebenfalls von Vorteil, dass auf der dritten Gelenkachse ein X2/C2-Riemenrad drehbar gelagert ist, welches über einen X2/C2-Riemen mit dem C2-Riemenrad gekoppelt ist. Der X2/C2-Riemen verläuft zwischen der zweiten Gelenkachse und der dritten Gelenkachse und überträgt eine Bewegung zur C-Ausrichtung des Arbeitsgerätes.

So ist es auch von Vorteil, dass auf der zweiten Gelenkachse ein X2-Riemenrad für einen X1-Riemen ortsfest angebracht ist. Dadurch wird nicht nur die durch den C-Antrieb erzeugte Drehbewegung des C 1-Riemenrades sondern auch eine durch den X-Antrieb erzeugte Bewegung des X1-Riemenrades auf die zweite Gelenkachse übertragen. Durch die feste Verbindung des X2-Riemenrades mit der zweiten Gelenkachse kann bei Wahl geeigneter Übersetzungs- und Untersetzungsverhältnisse zwischen Riemenrädern erreicht werden, dass sich der zweite Gelenkarmteil in entgegengesetzter Richtung zum ersten Gelenkarmteil dreht. Auch der Grad der Drehung ist dadurch einstellbar.

So ist es von Vorteil, dass das X2/C2-Riemenrad einen größeren Durchmesser als das über den X2/C2-Riemen mit diesem verbundene C2-Riemenrad aufweist.

Ebenso ist es von Vorteil, dass das X1-Riemenrad einen größeren Durchmesser als das X2-Riemenrad aufweist.

Wenn zum Beispiel der jeweils größere Durchmesser die doppelte Größe wie der jeweils kleinere Durchmesser der vorgenannten Riemenräder aufweist, ergibt sich eine vorteilhafte Bewegung des ersten Gelenkarmteils und des zweiten Gelenkarmteils zueinander.

Ein weiterer Vorteil der vorliegenden Erfindung ist schließlich, dass an der Befestigungskonsole eine vierte Gelenkachse für eine Bewegung des Arbeitsgerätes in einer A-Richtung ausgebildet ist. Dadurch kann, ohne einen größeren Platzbedarf zu benötigen, der Gelenkarm und somit das Arbeitsgerät insgesamt um die vierte Gelenkachse gedreht werden.

Eine Ausführungsform der vorliegenden Erfindung wird im Folgenden anhand der Zeichnung näher dargestellt. Es zeigen:
Fig. 1 eine schematische, perspektivische Ansicht von schräg oben eines Handhabungsgeräts gemäß vorliegender Erfindung mit angezeigtem Richtungsdiagramm;
Fig. 2 eine schematische, perspektivische Darstellung eines Gelenkarms des Handhabungsgeräts aus Fig. 1;
Fig. 3 eine Schnittdarstellung des Gelenkarms aus Fig. 2;
Fig. 4 eine perspektivische Darstellung des Handhabungsgeräts aus Fig. 1, nachdem sich dieses aus einer in Fig. 1 dargestellten ersten Position in die in Fig. 4 dargestellte zweite Position bewegt hat;
Fig. 5 eine schematische, perspektivische Darstellung des Handhabungsgeräts aus Fig. 4, nachdem sich dieses aus der zweiten Position in eine dritte Position bewegt hat;
Fig. 6 eine schematische, perspektivische Darstellung des Handhabungsgeräts aus Fig. 5, nachdem sich dieses aus der dritten Position in eine vierte Position bewegt hat;
Fig. 7 eine schematische, perspektivische Darstellung des Handhabungsgeräts aus Fig. 6, nachdem sich dieses aus der vierten Position in eine fünfte Position bewegt hat;
Fig. 8 eine schematische Draufsicht auf das Handhabungsgerät mit einem um eine C-Richtung nach rechts gedrehten Arbeitsgerät;
Fig. 9 eine schematische, perspektivische Draufsicht auf das Handhabungsgerät in Fig. 8 mit einer in Bezug auf die C-Richtung mittig gestellten Arbeitsgerät;
Fig. 10 eine schematische, perspektivische Darstellung einer Draufsicht des Handhabungsgeräts aus Fig. 9 mit einem in Bezug zur C-Richtung nach links gedrehten Arbeitsgerät;
Fig. 11 eine schematische Vorderansicht des Handhabungsgeräts gemäß vorliegender Erfindung um ein in A-Richtung gedrehtes Arbeitsgerät; und
Fig. 12 eine schematische, perspektivische Darstellung des Handhabungsgeräts aus Fig. 11 mit dem in A-Richtung nach links gedrehten Arbeitsgerät.

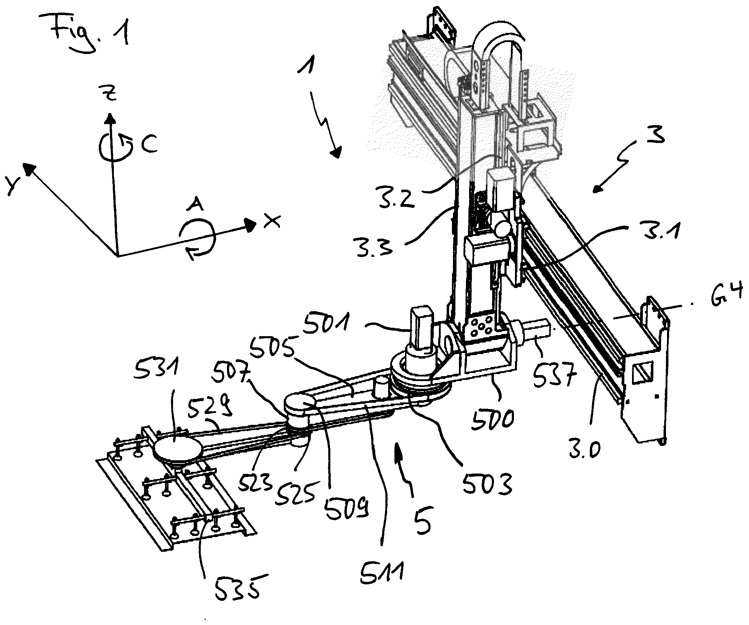

In Fig. 1 ist perspektivisch ein Handhabungsgerät 1 dargestellt. Das Handhabungsgerät 1 umfasst ein 2-Achsportal 3 zur Bereitstellung einer Bewegung in Z-Richtung und in Y-Richtung. An dem 2-Achsportal 3 ist ein Gelenkarm 5 verschiebbar angebracht, der eine Bewegung in X-Richtung bereitstellt. Im Sinn der vorliegenden Erfindung umfasst der Begriff "Handhabungsgerät" auch typische Industrieroboter, die als 6-Achs-Vertikalknickarmroboter ausgebildet sind und einen Gelenkarm 5 für eine Bewegung in X-Richtung aufweisen.

Die vorliegende Erfindung wird also lediglich an dem Ausführungsbeispiel eines "Handhabungsgerätes" beschrieben, ist aber trotz des Begriffs "Handhabungsgerät" nicht auf diese Ausführungsform beschränkt.

In Fig. 1 ist auch ein Koordinatensystem schematisch dargestellt, das die für die vorliegende Erfindung relevanten Bewegungsrichtungen in Bezug zu dem Handhabungsgerät 1 zeigt. Wichtig für die vorliegende Erfindung sind die Bewegungsrichtungen X, C und A, wobei C die Richtung um die Z-Achse beschreibt und A die Richtung um die X-Achse beschreibt.

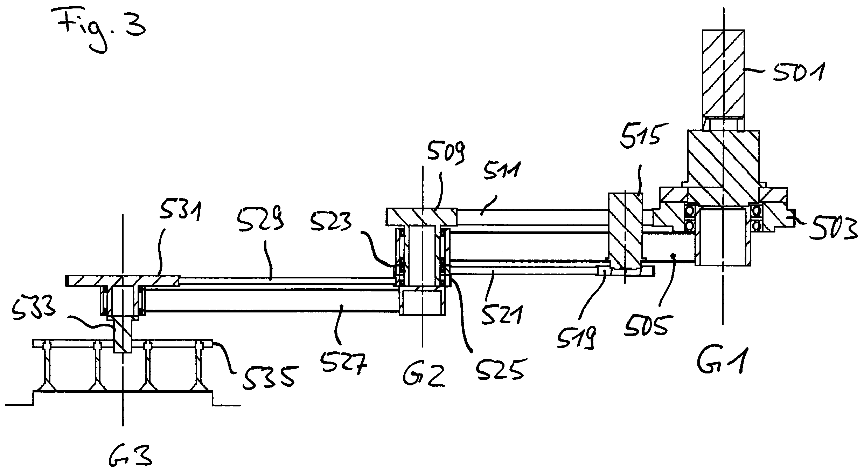

Das 2-Achsportal 3 umfasst die Y-Achse und wird durch ein Schienenprofil 3.0 gebildet. An dem Schienenprofil 3.0 ist ein Y-Schlitten 3.1 angebracht, der an dem Schienenprofil 3.0 in Y-Richtung verschiebbar gelagert ist. An dem Y-Schlitten 3.1 ist wiederum ein Z-Schienenprofil 3.2 angebracht, an dem ein Z-Schlitten 3.3 in Z-Richtung verschiebbar angebracht ist. Am unteren Ende des Z-Schlittens 3.3 ist der Gelenkarm 5 über eine Befestigungskonsole 500 mit einem X-Antrieb 501 verbunden. Ein X1-Riemenrad 503 ist fest mit der Befestigungskonsole 500 verbunden und dreht sich nicht. An dem X1-Antrieb 501 ist ein erstes Gelenkarmteil 505 drehbar gelagert (Fig. 3). An einem freien Ende 507 des ersten Gelenkarmteils 505 ist ein X2-Riemenrad 509 drehbar gelagert. Das X2-Riemenrad 509 dreht um eine zweite Gelenkachse G2 (Fig. 3), die parallel zur ersten Gelenkachse G1, und insbesondere vertikal, ausgerichtet ist. Zwischen dem X1-Riemenrad 503, das um die erste Gelenkachse G1 dreht, und dem X2-Riemenrad 509, das um die zweite Gelenkachse G2 dreht, ist ein X1-Riemen 511 schlupffrei angebracht. Der Begriff "Riemen" steht im Sinne der vorliegenden Erfindung für "Zahnriemen" oder alternativ auch für "Ketten". Das X2-Riemenrad 509 ist fest mit einem zweiten Gelenkarmteil 527 verbunden, weshalb sich der zweite Gelenkarmteil 527 in entgegengesetzte Richtung zum ersten Gelenkarmteil 505 dreht, wenn der X-Antrieb 501 aktiviert ist. Auf diese Weise wird die Antriebskraft des X-Antriebs direkt auf das Gelenkarmteil 505 und über das feststehende X1-Riemenrad 503, den Riemen 511 und das Riemenrad 509 auf das Gelenkarmteil 527 übertragen.

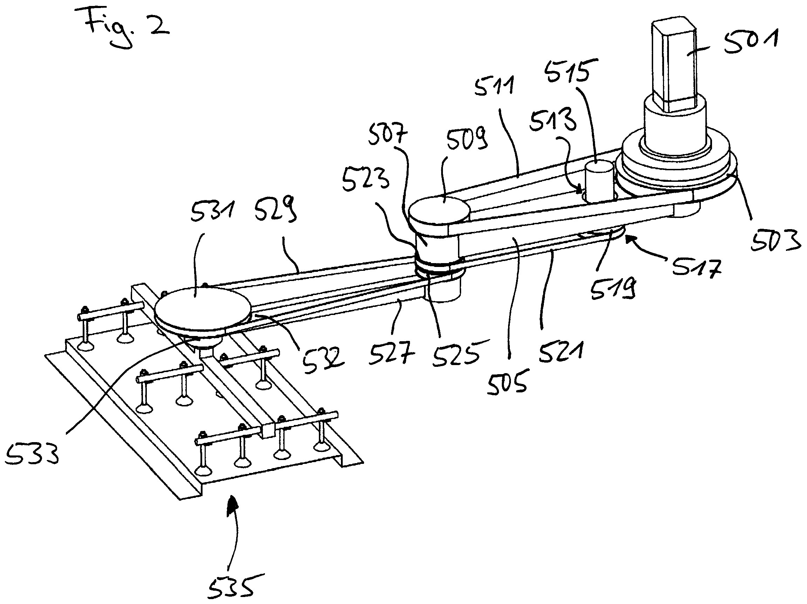

Der erste Gelenkarmteil 505 weist eine Ausnehmung 513 (Fig. 2) auf, in der ein C-Antrieb 515 angeordnet ist. An einem unteren Ende 517 des C-Antriebs 515 ist ein C-Riemenrad 519 angebracht, das um eine Vertikalachse dreht, die parallel zur ersten Gelenkachse G1 und zweiten Gelenkachse G2 ausgerichtet ist. Das C-Riemenrad 519 ist über einen C1-Riemen 521 mit einem C1-Riemenrad 523 verbunden, das um die zweite Gelenkachse G2 dreht. Das C1-Riemenrad 523 ist mit einem C2-Riemenrad 525 fest verbunden. Das X2-Riemenrad 509, das C1-Riemenrad 523 und das C2-Riemenrad 525 sind am freien Ende 507 des ersten Gelenkarmteils 505 konzentrisch zueinander angeordnet. Das C2-Riemenrad 525 ist unterhalb des C1-Riemenrads 523 angeordnet.

Das C2-Riemenrad 525 ist über einen X2/C2-Riemen 529 mit einem X3/C3-Riemenrad 531 am Ende 533 des zweiten Gelenkarmteils 527 verbunden. Das X3/C3-Riemenrad 531 ist am Ende 533 des zweiten Gelenkarmteils 527 drehbar gelagert. Auf diese Weise wird eine durch den X-Antrieb 501 initiierte Drehbewegung über den ersten Gelenkarmteil 505, das X2-Riemenrad 509, das C2-Riemenrad 525 und den X2/C2-Riemen 529 auf das X3/C3-Riemenrad 531übertragen. Das X3/C3-Riemenrad 531 dreht um eine dritte Gelenkachse G3 (Fig. 3), die wiederum parallel zu der zweiten Gelenkachse G2 und der ersten Gelenkachse G1 ausgerichtet ist. Eine durch den C2-Antrieb 515 initiierte Drehbewegung wird über das C-Riemenrad 519, den C1-Riemen 521, das C1-Riemenrad 523, das C2-Riemenrad 525, den X2/C2-Riemen 509 auf das X3/C3-Riemenrad 531 übertragen. Das C3-Riemenrad 531 ist wiederum fest mit einem Anschlussflansch 533 für ein Arbeitsgerät 535 verbunden. Das Arbeitsgerät 535 ist in der dargestellten Ausführungsform eine Greifeinrichtung.

In der dargestellten Ausführungsform hat das X1-Riemenrad 503 an der ersten Gelenkachse G1 den doppelten Durchmesser des X2-Riemenrads 507 (Verhältnis 2:1) an der zweiten Gelenkachse G2. Das C3-Riemenrad 531 an der dritten Gelenkachse G3 hat vorzugsweise den doppelten Durchmesser des C2-Riemenrads 525 (Verhältnis 2:1) an der zweiten Gelenkachse G2. Diese bevorzugten Größenverhältnisse vom X1-Riemenrad 503 zum X2-Riemenrad 509 von 2:1 und vom C2-Riemenrad 525 zum C3-Riemenrad 531 von 1:2 führen dazu, dass das Arbeitsgerät 535 mit dem ersten Gelenkarmteil 505 und dem zweiten Gelenkarmteil 527 eine Klappbewegung durchführen, die das Arbeitsgerät 535 auf einer Geraden in X-Richtung bewegt, wenn der C-Antrieb 515 nicht aktiv ist.

Optional und ergänzend umfasst die Befestigungskonsole 500 einen A-Antrieb 537 mit einer vierten Gelenkachse, die horizontal ausgerichtet ist und eine Bewegung des ersten und zweiten Gelenkarmteils in A-Richtung erlaubt.

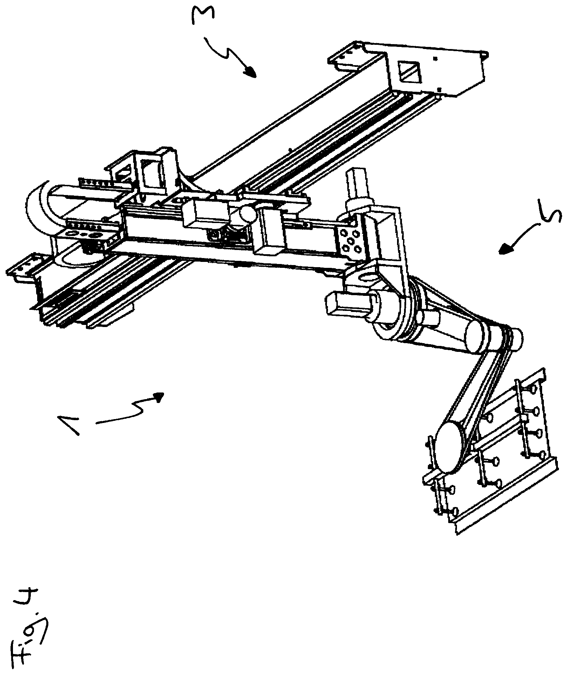

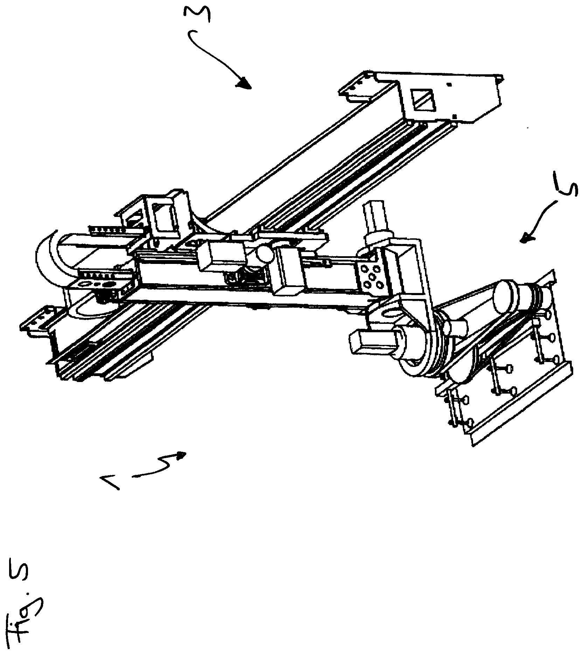

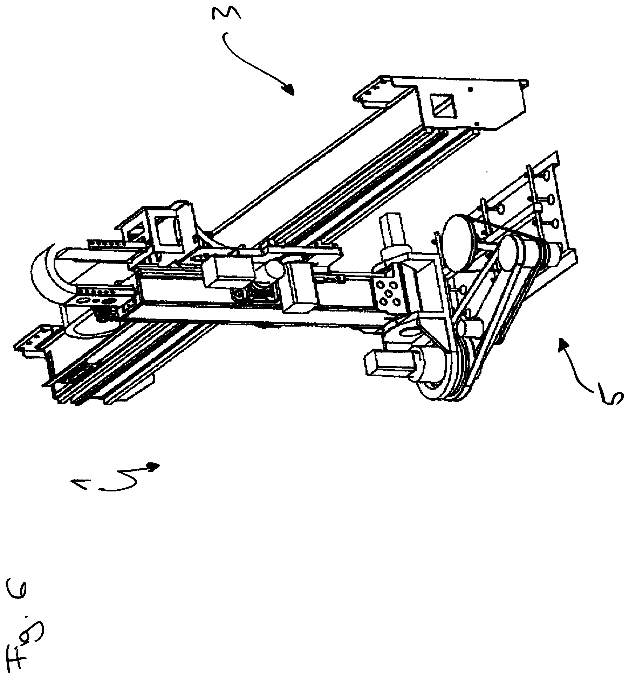

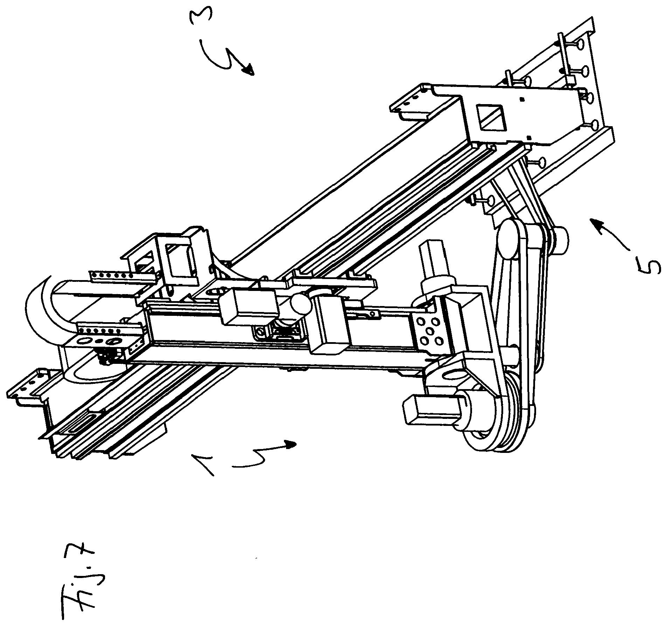

In Fig. 4, Fig. 5, Fig. 6 und Fig. 7 ist ein Bewegungsablauf mit vier Bewegungssituationen dargestellt, in denen das Arbeitsgerät 535 aus der in Fig. 1 dargestellten Position in die Position in Fig. 7 überführt wird.

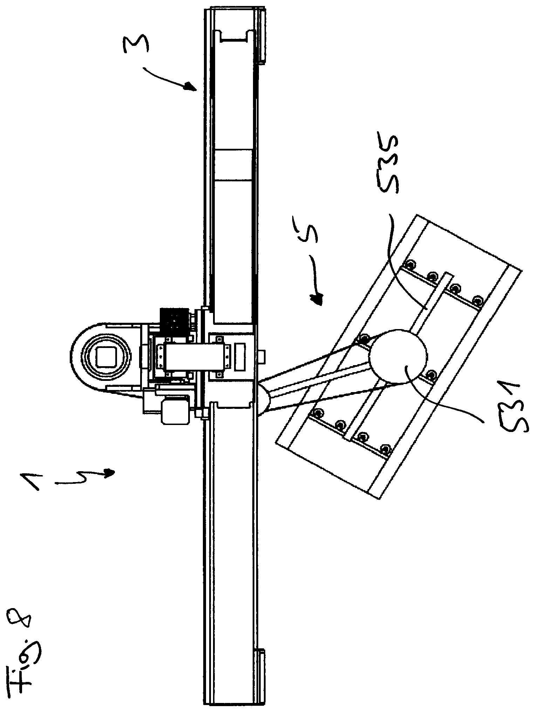

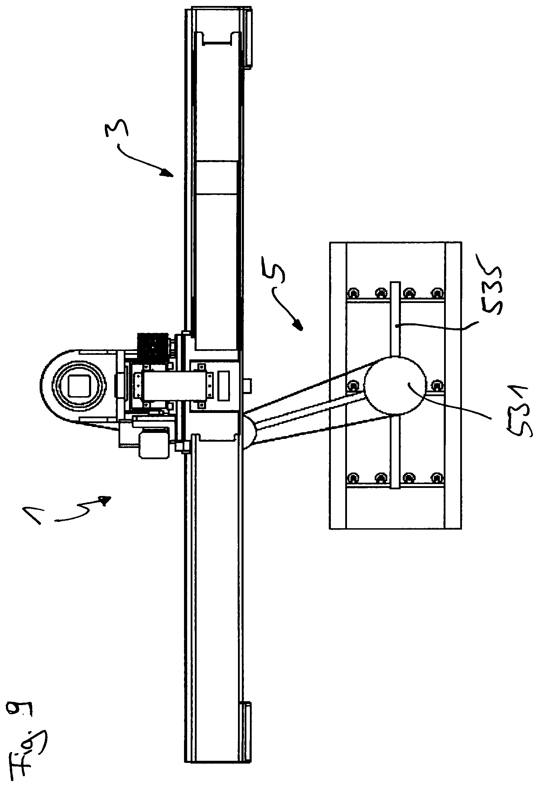

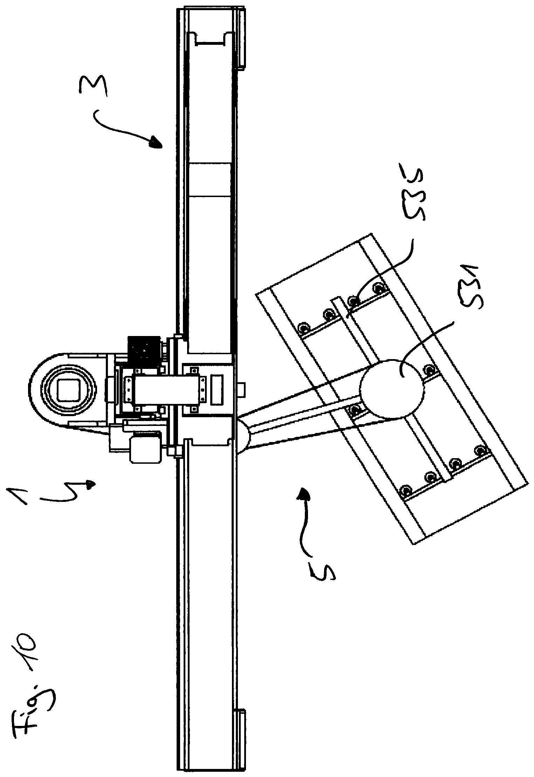

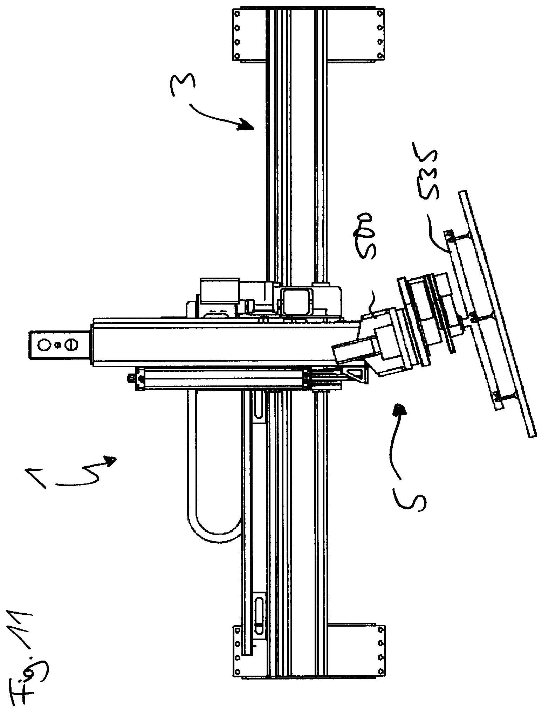

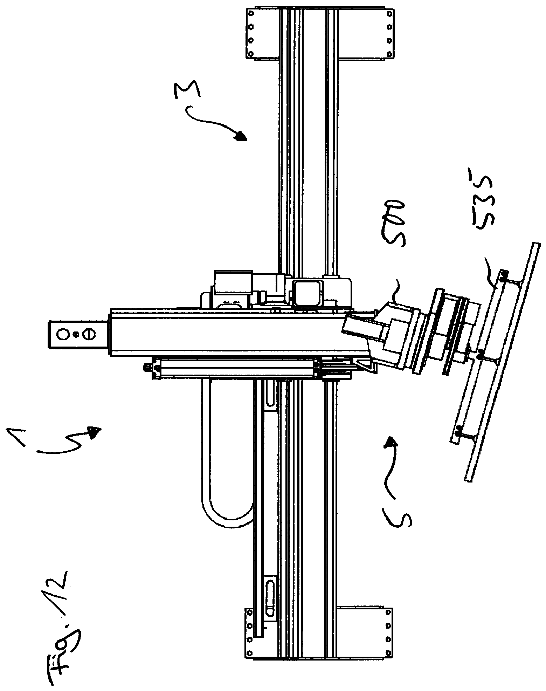

In Fig. 8, Fig. 9 und Fig. 10 ist ein Bewegungsablauf mit drei Bewegungssituationen dargestellt, in denen eine Bewegung des Arbeitsgerätes 535 in C-Richtung dargestellt ist. In Fig. 11 und 12 ist ein Bewegungsablauf mit zwei Bewegungssituationen dargestellt, in denen eine Bewegung des Arbeitsgerätes 535 in A-Richtung dargestellt ist.

Das Handhabungsgerät 1 und seine beweglichen Bauteile werden durch eine handelsübliche Steuereinrichtung gesteuert. Eine solche Steuereinrichtung umfasst Hardware- und Software- Applikationen und eine verdrahtete und/oder drahtlose Verbindung zu den jeweiligen Bauteilen. Diese ist nicht Gegenstand der vorliegenden Erfindung. Die vorliegende Erfindung kann aber mit einer rechnergestützten elektrischen und/oder elektronischen Steuerung und Architektur des Standes der Technik umgesetzt werden.

## Patentansprüche

1. Handhabungsgerät mit einer Befestigungskonsole (500), der über eine erste Gelenkachse (G1) mit einem ersten Gelenkarmteil (505) verbunden ist, einem zweiten Gelenkarmteil (527), das über eine zweite Gelenkachse (G2) mit dem ersten Gelenkarmteil (505) verbunden ist und mit einem Arbeitsgerät (535), das über eine dritte Gelenkachse (G3) mit dem zweiten Gelenkarmteil (527) verbunden ist, und mit einer Steuereinrichtung zum Steuern eines X-Antriebs (501, derart, dass das Arbeitsgerät (535) eine Bewegung in wenigstens einer X-Richtung durchführen kann,
**dadurch gekennzeichnet, dass**
ein C-Antrieb (515) in dem ersten Gelenkarmteil (505) angeordnet ist und über einen C1-Riemen (521) mit der zweiten Gelenkachse (G2) verbunden ist.

2. Handhabungsgerät nach Anspruch 1,
**dadurch gekennzeichnet,**
**dass** auf der zweiten Gelenkachse (G2) ein C1-Riemenrad (523) für den C1-Riemen (521) und ein C2-Riemenrad (525) für einen X2/C2-Riemen (529) fest miteinander verbunden und drehbar gelagert sind.

3. Handhabungsgerät nach Anspruch 1 und 2,
**dadurch gekennzeichnet,**
**dass** auf der zweiten Gelenkachse (G2) ein X2-Riemenrad (509) für einen X1-Riemen (511) drehbar gelagert ist.

4. Handhabungsgerät nach Anspruch 3,
**dadurch gekennzeichnet,**
**dass** auf der dritten Gelenkachse (G3) ein X3/C3-Riemenrad (531) für den X2/C2-Riemen (529) drehbar gelagert ist.

5. Handhabungsgerät nach Anspruch 4,
**dadurch gekennzeichnet,**
**dass** auf der ersten Gelenkachse (G1) ein X1-Riemenrad (503) für den X1-Riemen (511) drehbar gelagert ist.

6. Handhabungsgerät nach einem der Ansprüche 3 bis 5,
**dadurch gekennzeichnet,**
**dass** das X2-Riemenrad (509), das C1-Riemenrad (523) und das C2-Riemenrad (525) auf der zweiten Gelenkachse (G2) konzentrisch angeordnet sind.

7. Handhabungsgerät nach einem der Ansprüche 4 bis 6,
**dadurch gekennzeichnet,**
**dass** das X3/C3-Riemenrad (531) fest mit einem Anschlussflansch (533) des Arbeitsgerätes (535) verbunden ist.

8. Handhabungsgerät nach einem der Ansprüche 4 bis 7,
**dadurch gekennzeichnet,**
**dass** das X3/C3-Riemenrad (531) einen größeren Durchmesser als das über den X2/C2-Riemen (529) verbundene C2-Riemenrad (525) aufweist.

9. Handhabungsgerät nach einem der Ansprüche 5 bis 8,
**dadurch gekennzeichnet,**
**dass** das X1-Riemenrad (503) einen größeren Durchmesser als das X2-Riemenrad (509).

10. Handhabungsgerät nach einem der vorstehenden Ansprüche,
**dadurch gekennzeichnet,**
**dass** an der Befestigungskonsole (533) eine vierte Gelenkachse (G4) für eine Bewegung in einer A-Richtung ausgebildet ist.
